# EUROPEAN PATENT SPECIFICATION

(11) **EP 3 854 189 B1**
(45) Date of publication and mention of the grant of the patent: **11.10.2023**
(21) Application number: 20153278.5
(22) Date of filing: 23.01.2020
(51) Int. Cl.: A01B 15/02, A01B 17/00

(54) **TILLAGE TOOL ATTACHABLE TO A REVERSIBLE PLOUGH**
AN EINEM DREHPFLUG BEFESTIGBARES BODENBEARBEITUNGSWERKZEUG
OUTIL DE TRAVAIL DU SOL POUVANT SE FIXER À UNE CHARRUE RÉVERSIBLE

(43) Date of publication of application: 28.07.2021
(73) Proprietor: Kverneland Group Operations Norway AS, 4353 Klepp Stasjon (NO)
(72) Inventor: Bryne, Bjørn, 4340 Bryne (NO)
(74) Representative: Håmsø Patentbyrå AS

(56) References cited:
- EP-A1- 0 222 377
- EP-A2- 0 184 890
- WO-A2-2013/091608
- DE-A1- 2 825 334
- FR-A- 1 288 585

## Description

The invention concerns a tillage tool arrangement attachable to a plough provided with at least one mouldboard plough body and at least one tillage tool unit arranged to engage with soil being turned by the plough body.

In the agriculture, the preparation of the soil for sowing or planting includes multiple operations, often including ploughing followed by some kind of evening of the soil surface to present a field prepared for seed drilling or the like. Like in other businesses, farmers are aiming at performing several operations in one run.

From WO2013091608 A2 is known a soil-tilling device integrated in a reversible mouldboard plough, wherein a longitudinal frame extending along the plough, carrying several tools, e.g. groups of ring-shaped, staggered rollers evenly spaced along the frame. The frame is connected to the forward and rear portion of the plough frame via converging connecting rods. The convergence of the connecting rods is selected such that for the first furrow the front part of the integrated soil tilling apparatus is pivoted in rearwards to the reversible plough and the rear part of the integrated soil tilling apparatus assumes in both positions approximately the same distance from the furrow edge of the last plough body of the reversible plough. Via an adjusting centre having a double-acting hydraulic cylinder, the integrated soil-tilling apparatus can be brought into a secure fixed central position for the reversing operation and, during work, can be brought onto the soil with a pre-set supporting force into a soil-crumbling or soil-consolidating working position. The soil-tilling device is positioned far away from the gravity centre of the plough.

DE2825334 A1 discloses a reversible plough provided with tine tools arranged to work the soil turned by the plough bodies, the tine tools being attached to brackets extending from the plough frame from which several pairs of plough body legs are extending in vertical direction. Each bracket is located in-between a pair of plough bodies. The brackets are interconnected by struts. Near each mouldboard of the reversible plough is a harrow section which breaks up the turned soil. Harrow bars are releasably fixed to arms so that they can be adjusted in height. The brackets do not allow the plough bodies to release if hitting a stone.

EP222377 A1 discloses a multi-furrow mouldboard plough with a powered rotary harrow with drum-like harrow sections arranged on a common shaft extending along the mouldboard ends, every section having several tines extending radially from the shaft, the tines engaging into the turned soil behind every plough body. The powering of the harrow requires mechanical or hydraulic drive powered from the tractor.

Patent publication EP0184890 discloses a plough wherein an at least one plough body comprises a mouldboard and support members for being in contact with the furrow walls in the soil.

In FR1288585, a device is disclosed which is constituted by blades cutting the earth horizontally as well as by blades working vertically like an ordinary harrow. The device can be mounted on mouldboards of a plough.

The invention has for its object to remedy or to reduce at least one of the drawbacks of the prior art, or at least provide a useful alternative to prior art.

The object is achieved through features, which are specified in the description below and in the claims that follow.

A mouldboard plough is provided with a bar extending from a rear portion of a mouldboard of each plough body, extending substantially vertically when the mouldboard plough is in an operative state. On a reversible mouldboard plough the bar is preferably extending between the rear portions of opposing mouldboards of a pair of plough bodies, the bar being connected to each of the opposing mouldboards and extending substantially vertically when the mouldboard plough is in an operative state. A tillage tool arrangement comprising at least one tillage tool unit is attached to each bar, the tillage tool unit being provided with a set of implements arranged to engage with soil turned by the adjacent plough body, thus crushing and evening the upper layer of soil. The implements may be taken from the group of tines, packer or crumbler rollers, discs and crossboards. In one embodiment, every bar is provided with one single-stage tillage tool unit for each plough body. In an embodiment for a reversible mouldboard plough, every bar may be provided with a dual-stage tillage tool unit, the dual-stage tillage tool engaging the soil in each of the reversible plough's working positions, the dual-stage tillage tool unit being reversibly, articulatedly or displaceably attached to the bar. An articulated or displaceable tillage tool unit may be provided with a double set of implements.

The vertical position of the tillage tool units may be adjustable step by step or stepless. In a preferred embodiment, the tool units are provided with brackets complementary to the cross section of the bars, the brackets embracing bars and being lockable by pins or bolts fitting into through holes in the brackets and through bores in the bars or by screws engaging with the bars. Each bar may be provided with several vertically spaced through bores or recesses providing stepwise depth adjustment of the tillage tool units. Alternatively, the brackets may be displaceable along the respective bars by manually or remotely controlled actuators.

The vertical position of the tillage tool units may be remotely controlled by including one or more first actuators at each tillage tool arrangement.

The vertical and/or the horizontal angle of attack of the tillage tool units are preferably adjustable, manually or remotely, preferably by manually or remotely controlled actuators.

The vertical and/or the horizontal angle of attack of the tillage tool unit may be remotely controlled by including one or more second actuators at each tillage tool arrangement.

Furthermore, each implement of the tillage tool unit, i.e. each tine, packer or crumbler roller, disc or crossboard, may be individually adjustable.

The invention is defined by the independent patent claim. The dependent claims define advantageous embodiments of the invention.

More specifically, the invention relates to a tillage tool arrangement attachable to a plough provided with at least one mouldboard plough body, wherein the tillage tool arrangement comprises
at least one tillage tool unit arranged to engage with soil being turned by the plough body, and a bar for adjustably connecting the tillage tool unit to the plough body;
wherein the bar, when connecting the tillage tool unit to the mouldboard plough body, extends from the mouldboard plough body such that, when the mouldboard plough body is in operative, soil-turning state, the at least one tillage tool unit is in position to even out the soil turned by the mouldboard plough body.

The bar may be arranged to be attached to opposing plough bodies, extending between a first plough body and a second plough body of a pair of opposing mouldboard plough bodies of a reversible plough.

A stabilizing stay may extend between a protruding end portion of the bar and a structure of the plough at a distance from the respective plough body.

The at least one tillage tool unit may be provided with soil-working implements taken from a group comprising tines, packer or crumbler rollers, discs and crossboards.

The tillage tool unit may be displaceably attached to the bar allowing the tillage tool unit to be repositioned relative to the plough body.

A tillage tool frame may be displaceable in the longitudinal and/or transversal direction of the bar. Displacement of the tillage tool frame in the longitudinal direction of the bar corresponds to adjustment of the height of the tillage tool frame, when in a position of use. In an embodiment where the tillage tool frame is displaceable both in the longitudinal and in the transversal direction of the bar, such displacement corresponds to substantially vertical and substantially horizontal displacement in a position of use.

The tillage tool unit may comprise a tillage tool frame provided with a tool frame bracket arranged to embrace a portion of the bar.

The tool frame bracket may be provided with one or more attachment means arranged to lockingly engage with the bar.

The tillage tool unit may be reversibly, articulatedly or displaceably attached to the bar allowing the tillage tool unit to be repositioned relative first and the second plough bodies of a reversible plough in accordance with the turning of the reversible plough, maintaining the engagement with the soil being turned by the respective first or second plough body while ploughing the soil.

The bar may have a non-circular cross-section.

The tillage tool unit may be slidably attached to the bar by a remote-controlled first actuator.

The tillage tool unit may be slidably along the bar by a remote-controlled first actuator. Alternatively, a pair of opposing tillage tool units may be slidably attached to the bar, interconnected by the remote-controlled first actuator.

The bar may be attached to mouldboards of opposing plough bodies, protruding from rear mouldboard end portions of the respective plough bodies.

A vertical and/or a horizontal angle of attack of the tillage tool unit may be remotely controlled by one or more second actuators.

In the following is described examples of preferred embodiments illustrated in the accompanying drawings, wherein:
- Fig. 1: depicts in a perspective view a tillage tool arrangement for a reversible mouldboard plough according to the invention;
- Fig. 2: shows at a smaller scale a right-hand side view of a four-furrow reversible plough provided with tillage tool arrangements according to the invention;
- Fig. 3: shows a top view of the four-furrow reversible plough of figure 2;
- Fig. 4: shows at a larger scale a front view of a pair of plough bodies equipped with a tillage tool arrangement provided with remote depth adjustment;
- Fig. 5: shows a left-hand side view of a pair of plough bodies equipped with the tillage tool arrangement according to figure 4;
- Fig. 6a: depicts at a larger scale a tillage tool unit provided with tines;
- Fig. 6b: depicts a tillage tool unit provided with tines and packer rollers;
- Fig. 6c: depicts a tillage tool unit provided with a crossboard;
- Fig. 7: shows at a larger scale a perspective view a tillage tool arrangement for a conventional mouldboard plough according to the invention;
- Fig. 8: shows at a smaller scale a side view of a rear portion of a conventional plough provided with tillage tool arrangements according to the invention;
- Fig. 9: shows a perspective view from behind a pair of plough bodies of a reversible mouldboard plough provided with an alternative embodiment of the tillage tool arrangement;
- Fig. 10: depicts in a perspective view an alternative embodiment of the tillage tool arrangement for a reversible mouldboard plough, wherein the tillage tool arrangement is pivotal about a vertical axis, and each tillage tool unit is tiltable about a horizontal axis;
- Fig. 11: shows at a smaller scale a side view of the tillage tool arrangement attached on a reversible plough, wherein the opposing tillage tool units are tilted differently; and
- Fig. 12: shows at a smaller scale a top view of a four-furrow reversible plough wherein the tillage tool units of the succeeding pair of plough bodies have been set at different horizontal angle positions by pivoting the respective bars differently.

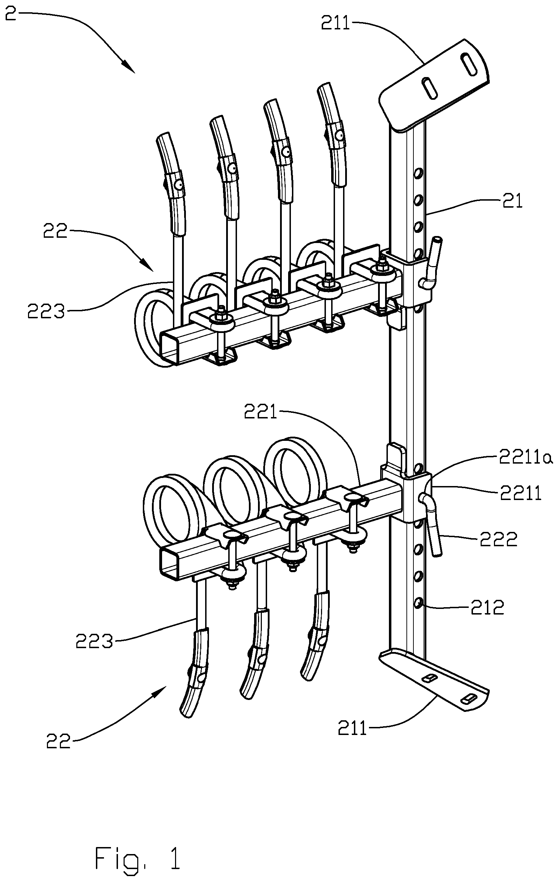

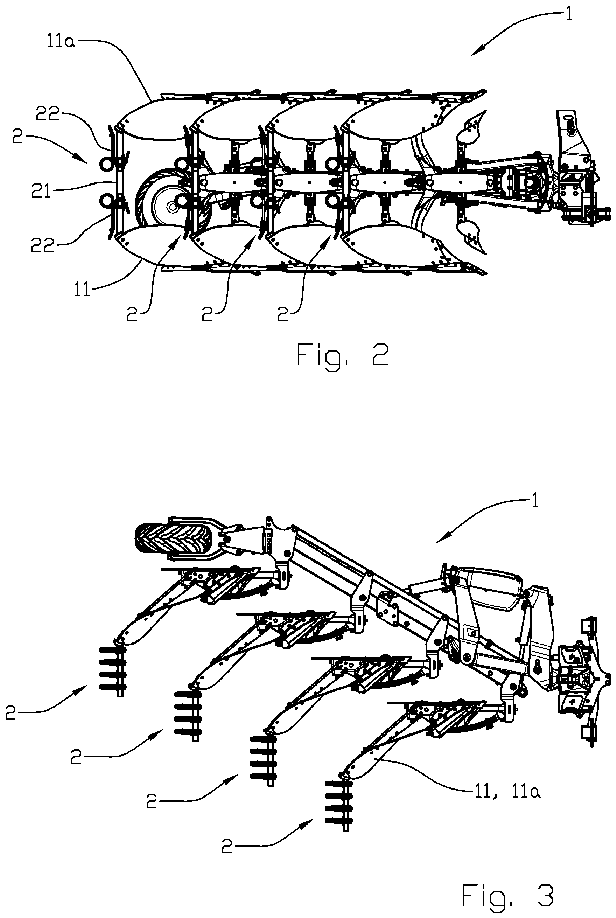

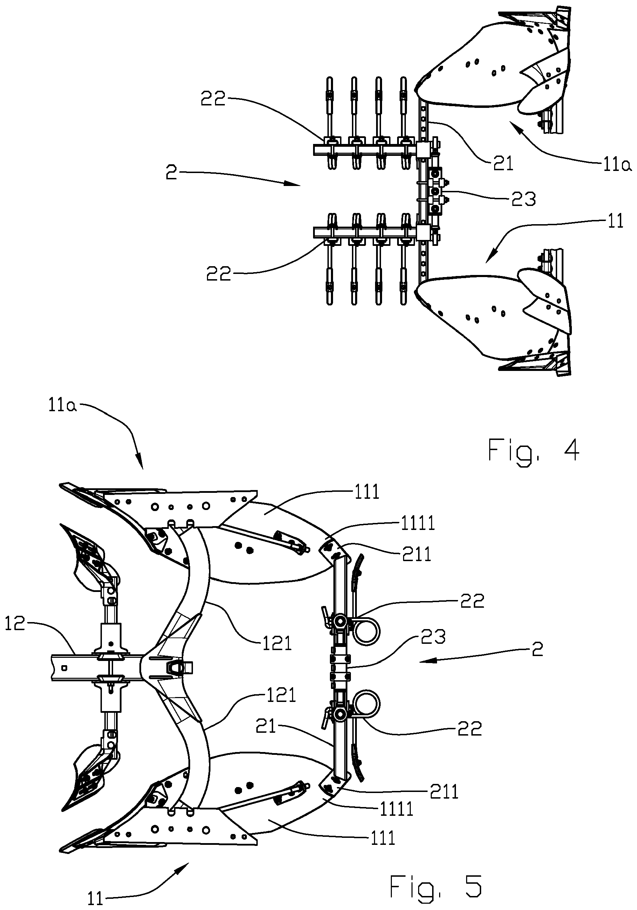

A tillage tool arrangement 2 is depicted in figure 1, arranged to be attached at rear end portions 1111 of opposing mouldboards 111 of plough bodies 11, 11a of a reversible plough 1 as shown in figures 2 and 3, a bar 21 extending between said plough bodies 11, 11a. The bar 21, which in the embodiment disclosed has a quadrangular cross section, is provided with bar end brackets 211 arranged to be bolted onto the end portions 1111 of the opposing pair of mouldboards 111 (see figure 5).

The depicted embodiment of the tillage tool arrangement 2 comprises a pair of tillage tool units 22, one tillage tool unit 22 facing in opposite direction of the other one. The embodiment of the tillage tool units 22 depicted in figures 1, 2, 3, 4, 5 and 6a is provided with several soil-working implements in the form of tines 223 attached to a tillage tool frame 221 extending from the bar 21. In its simplest embodiment, depicted in figures 1, 2, 3, 6a, 6b and 6c, the frame 221 is attached to the bar 21 by a U-formed bracket 2211 engaging the bar 21 and being locked to the bar 21 by attachment means 222 in the form of a locking pin extending through holes 2211a in the bracket 2211 and one of several through bores 212 in the bar 21, thereby allowing a working depth of the tillage tool units 22 to be adjusted by repositioning the tillage tool units 22 along the bar 21, and to easily dismantle the tillage tool units 22 from the plough 1.

Figure 4 and 5 depicts an alternative embodiment of the invention, the working depth of the tillage tool units 22 being remotely adjustable by an actuator 23, here shown as a hydraulic dual cylinder being attached to the bar 21, allowing the tillage tool units 22 to be displaced along the bar 21.

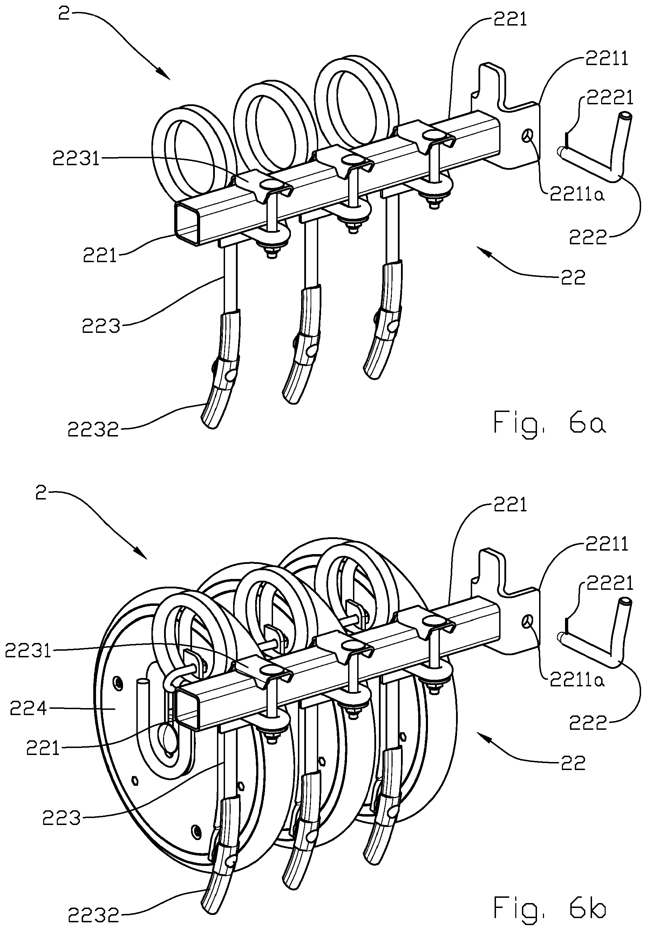

Figure 6a depicts the tillage tool unit 22 in more details. The tines 223 are shown evenly spread along the tillage tool frame 221, being attached to said frame 221 by clamps 2231.

However, various tine distribution patterns along the tillage tool frame 221 may be used by individually repositioning the tines 223 in relation to each other along the frame 221. Every tine 223 is provided with a replaceable wearing part 2232. The locking pin 222 is securable by means of a securing means 2221, here depicted as a pin. Various types of securing means 2221 might be used, for example a ring pin or a split pin for ease of dismantling when adjusting the working depth of the tillage tool units 22.

Figure 6b depicts a second embodiment of the tillage tool unit 22, wherein soil-working implements 224 in the form of packer rollers are located close to the tines 223.

While the tines 223 are crumbling and evening the ridge made by the corresponding plough body 11, 11a, the additional packer rollers 224 according to the embodiment of figure 6b might crush clods and pack the top soil layer, thus leaving the ploughed field in a better shape for consecutive seed drilling, etc.

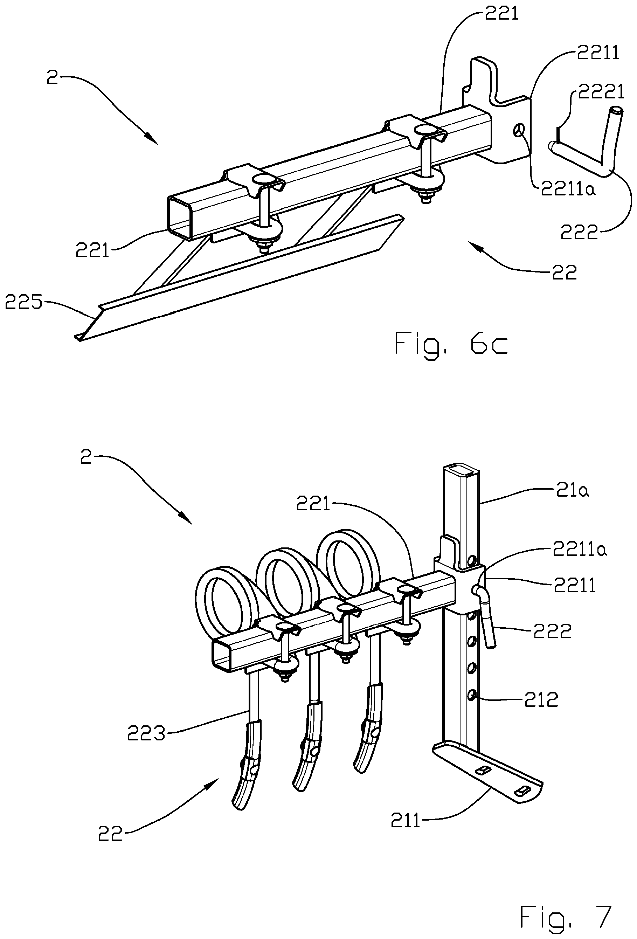

Figure 6c depicts schematically a third embodiment of the tillage tool unit 22, where the tillage implement 224 is a crossboard extending transversely to the working direction of the tillage tool unit 22.

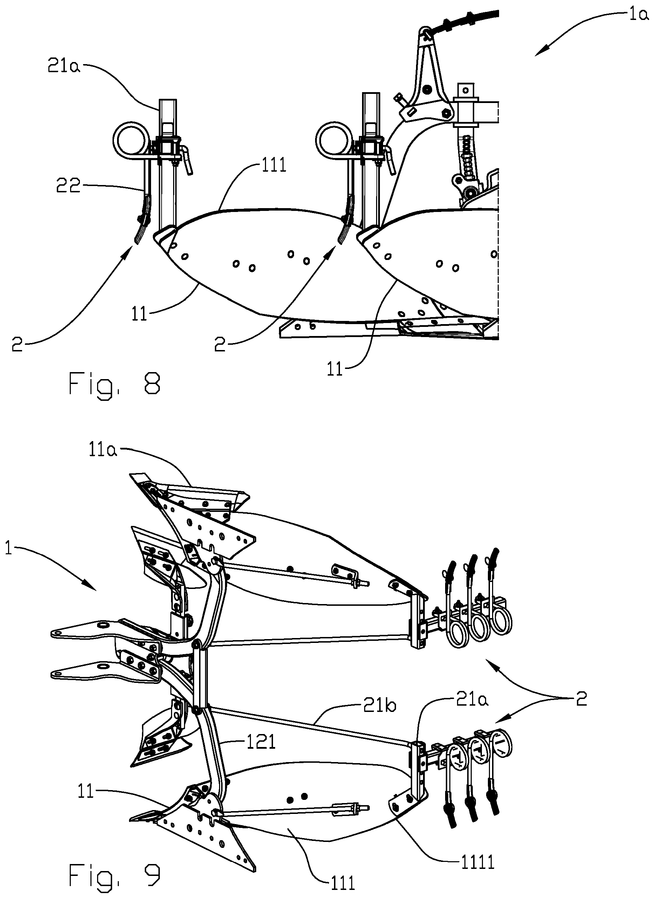

Figures 7 depicts a tillage tool arrangement 2 arranged to be attached at the rear end portion 1111 of the mouldboards 111 of plough bodies 11 of a conventional plough 1a as shown in figure 8, a bar 21a extending approximately vertically from the plough bodies 11.

The bar 21a, which in the embodiment disclosed has a quadrangular cross section, is provided with a bar end bracket 211 arranged to be bolted onto the end portion 1111 of the mouldboard 111 (see figure 8).

Figure 9 depicts two tillage tool arrangements 2 according to figure 7 and 8 modified to suit a reversible mouldboard plough 1, one tillage tool arrangement 2 being attached at the rear end portions 1111 of each mouldboard 111 of the opposing plough bodies 11, 11a of the reversible plough 1. A stabilizing stay 21b is extending from the bar 21a of each tillage tool arrangement 2 to a portion of a plough leg 121.

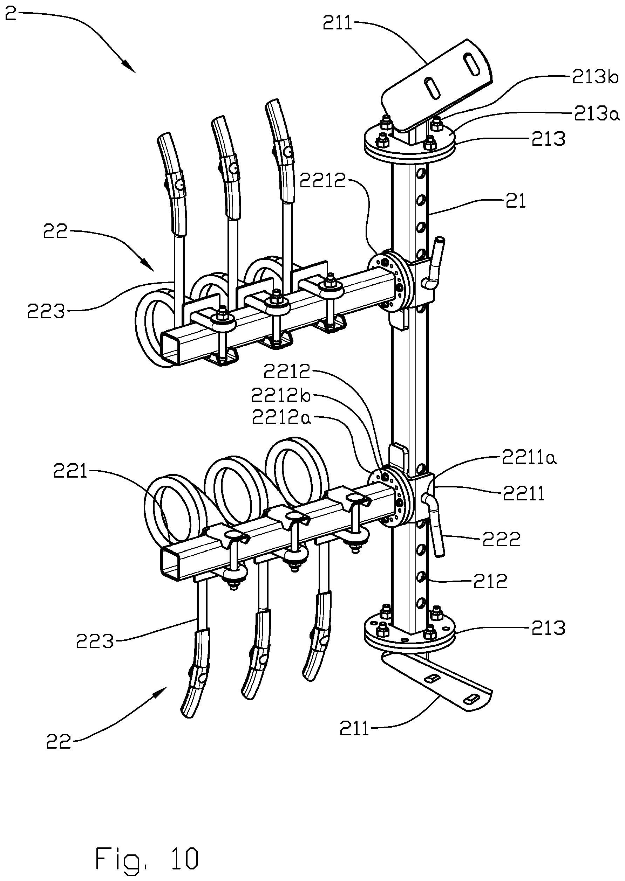

It is now referred to figure 10, wherein an alternative tillage tool arrangement is provided with a pivotal bar 21, said bar being provided with bar pivoting joints 213 located close to the bar end brackets 211. The shown embodiment of the pivoting joints 213 are provided with opposing flanges 213a being firmly joint together in various angular positions by bolts 213b. Furthermore, the tool frame 221 of each tillage tool unit 22 is provided with a tillage tool tilting joint 2212, each joint 2212 being provided with opposing flanges 2212a being firmly joint together in various angular positions by bolts 2212b. Thus, a vertical and a horizontal angle of attack of the tillage tool units 22 can be changed.

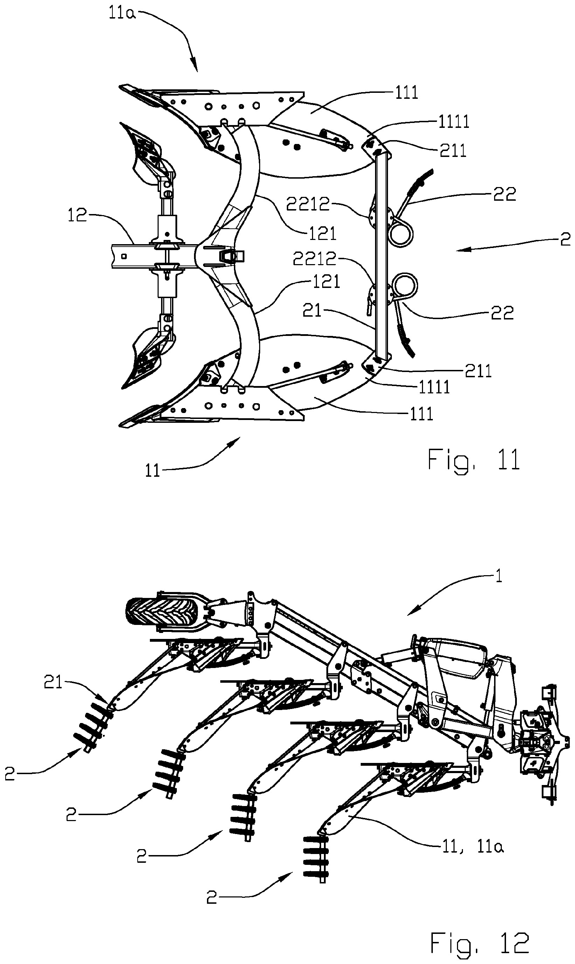

In figure 11 the two opposing tillage tool units 22 are differently tilted by setting the joint 2212 at different angular positions. The tillage tool units 22 may even be set to an inactive position, e.g. tilting the tillage units 22 to a substantially horizontal position, preferably directing to back of the plough 12.

It is now referred to figure 12, wherein the tillage tool arrangements 2 of the successive pair of plough bodies 11, 11a are set at different horizontal positions by pivoting the bars 21 according to figure 10 differently.

The pivoting of the bar 21 and the tilting of the tillage tool units 22 may be remotely controlled by electric or hydraulic actuators (not shown).

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim.

Use of the verb "comprise" and its conjugations does not exclude the presence of elements or steps other than those stated in a claim. The article "a" or "an" preceding an element does not exclude the presence of a plurality of such elements.

The mere fact that certain measures are recited in mutually different dependent claims does not indicate that a combination of these measures cannot be used to advantage.

## Claims

1. A tillage tool arrangement (2) for being attached to a mouldboard plough (1, 1a) provided with at least one mouldboard plough body (11) for turning soil,
**characterized in that** the tillage tool arrangement (2) comprises:
at least one tillage tool unit (22); and
a bar (21, 21a) for adjustably connecting the tillage tool unit (22) to the mouldboard plough body (11);
wherein the bar (21, 21a), when connecting the tillage tool unit (22) to the mouldboard plough body (11), extends upwards from the mouldboard plough body (11) such that, when the mouldboard plough body (11) is in operative, soil-turning state, the at least one tillage tool unit (22) is in position to even out the soil turned by the mouldboard plough body (11).

2. The tillage tool arrangement (2) according to claim 1, wherein the bar (21) is arranged to be attached to opposing mouldboard plough bodies (11, 11a), extending between a first plough body (11) and a second plough body (11a) of a pair of opposing mouldboard plough bodies (11, 11a) of a reversible plough (1).

3. The tillage tool arrangement (2) according to claim 1, further comprising a stabilizing stay (21b) extending from a protruding end portion of the bar (21a) for being connected to a structure (121) of the plough (1, 1a) at a distance from the respective plough body (11).

4. The tillage tool arrangement (2) according to claim 1, wherein the at least one tillage tool unit (22) is provided with soil-working implements (223, 224, 225) taken from a group comprising tines, packer or crumbler rollers, discs and crossboards.

5. The tillage tool arrangement (2) according to claim 1, wherein the tillage tool unit (22) is displaceably attached to the bar (21) allowing the tillage tool unit (22) to be repositioned relative to the plough body (11).

6. The tillage tool arrangement (2) according to claim 5, further comprising a tillage tool frame (221) displaceable in the longitudinal and/or transversal direction of the bar (21).

7. The tillage tool arrangement (2) according to claim 1, wherein the tillage tool unit (22) comprises a tillage tool frame (221) provided with a tool frame bracket (2211) arranged to embrace a portion of the bar (21).

8. The tillage tool arrangement (2) according to claim 7, wherein the tool frame bracket (2211) is provided with one or more attachment means (222) arranged to lockingly engage with the bar (21).

9. The tillage tool arrangement (2) according to claim 1, wherein the tillage tool unit (22) is reversibly, articulatedly or displaceably attached to the bar (21) allowing the tillage tool unit (22) to be repositioned relative to the first and the second plough bodies (11, 11a) of the reversible mouldboard plough (1) in accordance with the turning of the reversible plough (1), maintaining the engagement with the soil being turned by the respective first or second plough body (11, 11a) while ploughing the soil.

10. The tillage tool arrangement (2) according to claim 1, wherein the bar (21, 21a) has a non-circular cross-section.

11. The tillage tool arrangement (2) according to claim 1, further comprising a remote-controlled first actuator (23) slidably attaching the tillage tool unit (22) to the bar (21).

12. The tillage tool arrangement (2) according to claim 1, further comprising a remote-controlled first actuator (23) allowing the tillage tool unit (22) to be slidable along the bar (21a).

13. The tillage tool arrangement (2) according to claim 2, comprising a pair of opposing tillage tool units (22) slidably attached to the bar (21), and a remote-controlled first actuator (23) interconnecting the tillage tool units (22).

14. The tillage tool arrangement (2) according to claim 1, further comprising one or more second actuators for remotely controlling a vertical and/or a horizontal angle of attack of the tillage tool unit (22).

15. A mouldboard plough (1, 1a) comprising:
- at least one mouldboard plough body (11) for turning soil; and
- the tillage tool arrangement (2) according to any one of the preceding claims;
wherein the tillage tool arrangement (2) by means of the bar (21, 21a) is adjustably connected to the at least one mouldboard plough body (11) such that, when the mouldboard plough body (11) is in operative, soil-turning state, the tillage tool unit (22) is in position to even out the soil turned by the mouldboard plough body (11).

## Patentansprüche

1. Bodenbearbeitungswerkzeug-Anordnung (2) zur Befestigung an einen Mittelscharpflug (1, 1a), welcher mit mindestens einem Mittelscharpflugkörper (11) zur Umwälzung von Erde ausgestattet ist, **dadurch gekennzeichnet, dass** die Bodenbearbeitungswerkzeug-Anordnung (2) aufweist:
mindestens eine Bodenbearbeitungswerkzeug-Einheit (22); und
eine Stange (21, 21a) zur einstellbaren Verbindung der Bodenbearbeitungswerkzeug-Einheit (22) an den Mittelscharpflugkörper (11); wobei die Stange (21, 21a) beim Verbinden der Bodenbearbeitungswerkzeug-Einheit (22) an den Mittelscharpflugkörper (11) sich vom Mittelscharpflugkörper (11) aufwärts erstreckt, sodass, wenn der Mittelscharpflugkörper (11) sich im operativen, erdumwälzenden Zustand befindet, die mindestens eine Bodenbearbeitungswerkzeug-Einheit (22) sich in einer Position befindet, um die vom Mittelscharpflugkörper (11) umgewälzte Erde zu ebnen.

2. Bodenbearbeitungswerkzeug-Anordnung (2) gemäss Anspruch 1, wobei die Stange (21) derart angeordnet ist, um an einander gegenüberliegende Mittelscharpflugkörper (11, 11a) befestigt zu werden, welche sich zwischen einem ersten Pflugkörper (11) und einem zweiten Pflugkörper (11a) eines Paars von einander gegenüberliegenden Mittelscharpflugkörpem (11, 11a) eines Drehpflugs (1) ausdehnen.

3. Bodenbearbeitungswerkzeug-Anordnung (2) gemäss Anspruch 1, ferner aufweisend eine stabilisierende Stütze (21b), welche sich von einem hervorstehenden Endabschnitt der Stange (21a) aus erstreckt, zum Verbinden an eine Struktur (121) des Pflugs (1, 1a) in einem Abstand vom betreffenden Pflugkörper (11).

4. Bodenbearbeitungswerkzeug-Anordnung (2) gemäss Anspruch 1, wobei die mindestens eine Bodenbearbeitungswerkzeug-Einheit (22) mit Erdbearbeitungsinstrumenten (223, 224, 225) ausgestattet ist, welche ausgewählt sind aus einer Gruppe aufweisend Zinken, Dichtungsroller, Mahlroller, Scheiben und Crossboards.

5. Bodenbearbeitungswerkzeug-Anordnung (2) gemäss Anspruch 1, wobei die Bodenbearbeitungswerkzeug-Einheit (22) verschiebbar an der Stange (21) befestigt ist, wodurch die Position der Bodenbearbeitungswerkzeug-Einheit (22) in Bezug auf den Pflugkörper (11) anpassbar ist.

6. Bodenbearbeitungswerkzeug-Anordnung (2) gemäss Anspruch 5, ferner aufweisend einen Bodenbearbeitungswerkzeug-Rahmen (221), welcher in der Längsrichtung und/oder in der Transversalrichtung der Stange (21) verschiebbar ist.

7. Bodenbearbeitungswerkzeug-Anordnung (2) gemäss Anspruch 1, wobei die Bodenbearbeitungswerkzeug-Einheit (22) einen Bodenbearbeitungswerkzeug-Rahmen (221) aufweist, welcher mit einer Werkzeugrahmenspange (2211) ausgestattet ist, um einen Abschnitt der Stange (21) zu umschliessen.

8. Bodenbearbeitungswerkzeug-Anordnung (2) gemäss Anspruch 7, wobei die Werkzeugrahmenspange (2211) mit einem oder mehreren Befestigungsmitteln (222) ausgestattet ist, um mit der Stange in eine Verriegelungsverbindung zu treten.

9. Bodenbearbeitungswerkzeug-Anordnung (2) gemäss Anspruch 1, wobei die Bodenbearbeitungswerkzeug-Einheit (22) reversibel, artikuliert oder verschiebbar an der Stange (21) befestigt ist, wodurch es der Bodenbearbeitungswerkzeug-Einheit (22) ermöglicht wird, in Bezug auf die ersten und zweiten Pflugkörper (11, 1 1a) des Mittelscharpflugs (1) gemäss der Drehbewegung des Drehpflugs (1) umpositioniert zu werden, unter Erhaltung des Eingriffs mit der vom ersten resp. zweiten Pflugkörper (11, 1 1a) umzuwälzenden Erde während des Pflügens der Erde.

10. Bodenbearbeitungswerkzeug-Anordnung (2) gemäss Anspruch 1, wobei die Stange (21, 21a) einen nicht-kreisrunden Querschnitt aufweist.

11. Bodenbearbeitungswerkzeug-Anordnung (2) gemäss Anspruch 1, ferner aufweisend einen ferngesteuerten ersten Antrieb (23), welcher die Bodenbearbeitungswerkzeug-Einheit (22) verschiebbar an der Stange (21) befestigt.

12. Bodenbearbeitungswerkzeug-Anordnung (2) gemäss Anspruch 1, ferner aufweisend einen ferngesteuerten ersten Antrieb (23), welcher es der Bodenbearbeitungswerkzeug-Einheit (22) ermöglicht, entlang der Stange (21a) verschiebbar zu sein.

13. Bodenbearbeitungswerkzeug-Anordnung (2) gemäss Anspruch 2, aufweisend ein Paar von einander gegenüberliegenden Bodenbearbeitungswerkzeug-Einheiten (22), welche verschiebbar an der Stange (21) befestigt sind, und einen ferngesteuerten ersten Antrieb (23), welcher die Bodenbearbeitungswerkzeug-Einheiten (22) untereinander verbindet.

14. Bodenbearbeitungswerkzeug-Anordnung (2) gemäss Anspruch 1, ferner aufweisend einen oder mehrere zweite Antriebe zur Fernsteuerung eines vertikalen und/oder eines horizontalen Angriffswinkels der Bodenbearbeitungswerkzeug-Einheit (22).

15. Mittelscharpflug (1, 1a), aufweisend:
- mindestens einen Mittelscharfpflugkörper (11) zum Umwälzen von Erde; und
- die Bodenbearbeitungswerkzeug-Anordnung (2) gemäss einem der vorhergehenden Ansprüche;
wobei die Bodenbearbeitungswerkzeug-Anordnung (2) mittels der Stange (21, 21a) einstellbar mit dem mindestens einen Mittelscharpflugkörper (11) verbunden ist, sodass, wenn der Mittelscharpflugkörper (11) sich in einem operativen, erdumwälzenden Zustand befindet, die Bodenbearbeitungswerkzeug-Einheit (22) sich in einer Position befindet, um die vom Mittelscharpflugkörper (11) umgewälzte Erde zu ebnen.

## Revendications

1. Dispositif d'outil de travail du sol (2) destiné à être fixé à une charrue à versoir (1, 1a) munie d'au moins un corps de charrue à versoir (11) pour retourner le sol,
**caractérisé en ce que** le dispositif d'outil de travail du sol (2) comprend :
au moins une unité d'outil de travail du sol (22) ; et
une barre (21, 21a) pour relier de manière réglable l'unité d'outil de travail du sol (22) au corps de charrue à versoir (11) ;
dans lequel la barre (21, 21a), lorsqu'elle relie l'unité d'outil de travail du sol (22) au corps de charrue à versoir (11), s'étend vers le haut à partir du corps de charrue à versoir (11) de sorte que, lorsque le corps de charrue à versoir (11) est en état de fonctionnement et de retournement du sol, l'au moins une unité d'outil de travail du sol (22) est en position d'égaliser le sol retourné par le corps de charrue à versoir (11).

2. Dispositif d'outil de travail du sol (2) selon la revendication 1, dans lequel la barre (21) est conçue pour être fixée à des corps de charrue à versoir opposés (11, 11a), s'étendant entre un premier corps de charrue (11) et un second corps de charrue (11a) d'une paire de corps de charrue à versoir opposés (11, 11a) d'une charrue réversible (1).

3. Dispositif d'outil de travail du sol (2) selon la revendication 1, comprenant en outre un étai de stabilisation (21b) s'étendant à partir d'une partie d'extrémité saillante de la barre (21a) pour être relié à une structure (121) de la charrue (1, 1a) à une certaine distance du corps de charrue respectif (11).

4. Dispositif d'outil de travail du sol (2) selon la revendication 1, dans lequel au moins une unité d'outils de travail du sol (22) est pourvue d'outils de travail du sol (223, 224, 225) choisis dans un groupe comprenant des dents, des rouleaux packer ou émietteur, des disques et des lames.

5. Dispositif d'outil de travail du sol (2) selon la revendication 1, dans lequel l'unité d'outils de travail du sol (22) est fixée de manière déplaçable à la barre (21), ce qui permet de repositionner l'unité d'outils de travail du sol (22) par rapport au corps de charrue (11).

6. Dispositif d'outil de travail du sol (2) selon la revendication 5, comprenant en outre un cadre d'outil de travail du sol (221) déplaçable dans la direction longitudinale et/ou transversale de la barre (21).

7. Dispositif d'outil de travail du sol (2) selon la revendication 1, dans lequel l'unité d'outil de travail du sol (22) comprend un cadre d'outil de travail du sol (221) muni d'un collier de cadre d'outil (2211) conçu pour englober une partie de la barre (21).

8. Dispositif d'outil de travail du sol (2) selon la revendication 7, dans lequel le collier de cadre d'outil (2211) est pourvu d'un ou de plusieurs moyens de fixation (222) conçus pour s'engager de manière verrouillée avec la barre (21).

9. Dispositif d'outil de travail du sol (2) selon la revendication 1, dans lequel l'unité d'outil de travail du sol (22) est fixée de manière réversible, articulée ou déplaçable à la barre (21), ce qui permet de repositionner l'unité d'outil de travail du sol (22) par rapport au premier et au second corps de charrue (11, 11a) de la charrue à versoir réversible (1) en fonction de la rotation de la charrue réversible (1), en maintenant l'engagement avec le sol retourné par le premier ou le second corps de charrue respectif (11, 11a) pendant le labourage du sol.

10. Dispositif d'outil de travail du sol (2) selon la revendication 1, dans lequel la barre (21, 21a) a une section transversale non circulaire.

11. Dispositif d'outil de travail du sol (2) selon la revendication 1, comprenant en outre un premier actionneur télécommandé (23) fixant de manière coulissante l'unité d'outil de travail du sol (22) à la barre (21).

12. Dispositif d'outil de travail du sol (2) selon la revendication 1, comprenant en outre un premier actionneur télécommandé (23) permettant à l'unité d'outil de travail du sol (22) de coulisser le long de la barre (21a).

13. Dispositif d'outil de travail du sol (2) selon la revendication 2, comprenant une paire d'unités d'outil de travail du sol opposées (22) fixées de manière coulissante à la barre (21), et un premier actionneur télécommandé (23) reliant les unités d'outil de travail du sol (22).

14. Dispositif d'outil de travail du sol (2) selon la revendication 1, comprenant en outre un ou plusieurs seconds actionneurs pour commander à distance un angle d'attaque vertical et/ou horizontal de l'unité d'outil de travail du sol (22).

15. Charrue à versoir (1, 1a) comprenant :
- au moins un corps de charrue à versoir (11) pour retourner le sol ; et
- le dispositif d'outils de travail du sol (2) selon l'une quelconque des revendications précédentes ;
dans laquelle le dispositif d'outil de travail du sol (2) est relié de manière réglable à l'au moins un corps de charrue à versoir (11) au moyen de la barre (21, 21a), de sorte que, lorsque le corps de charrue à versoir (11) est en état de fonctionnement et de retournement du sol, l'unité d'outil de travail du sol (22) est en position d'égaliser le sol retourné par le corps de charrue à versoir (11).
